# EUROPEAN PATENT APPLICATION

(11) **EP 0 892 406 A2**
(43) Date of publication of application: **20.01.1999**
(21) Application number: 98305665.6
(22) Date of filing: 16.07.1998
(51) Int. Cl.: G11B 27/30, H04N 5/782, H04N 5/92, H04N 5/783, G11B 27/10, G11B 15/087, G11B 15/02, G11B 15/46, G11B 27/11, G11B 27/13, G11B 27/34

(54) **Video signal recording and reproducing apparatus**

(30) Priority: 17.07.1997 JP 192164/97
(71) Applicant: HITACHI, LTD., Chiyoda-ku, Tokyo (JP)
(72) Inventor: Amada, Nobutaka, Yokohama-shi (JP); Okamoto, Hiroo, Hodogaya-ku, Yokohama-shi (JP); Ohara, Yasunori, Hitachinaka-shi (JP); Okouchi, Takeo, Naka-gun, Ibaraki-ken (JP)
(74) Representative: Calderbank, Thomas Roger

(57) **Abstract**

Even when a digital video signal or coexisting digital and analog video signals are recorded on a roll of tape (11), a program recorded on the tape can be retrieved easily regardless of the kind of recorded signals in a video signal recording and reproducing apparatus. The apparatus has a storage circuit (53) for storing recording data pieces indicative of the recording contents of digital and analog video signals, a first adding circuit (25) for adding to the analog video signal identification information for identifying the recording data pieces, a first recording/reproducing circuit and mechanism (12) for recording and reproducing the analog video signal added with the identification information, an extracting circuit (27) for extracting the identification information from a reproduced analog video signal, a second adding circuit (42) for adding the identification information to the digital video signal, and a second recording/reproducing circuit and mechanism (14) for recording and reproducing the digital video signal added with the identification information.

## Description

The present invention relates to a video tape recorder capable of easily index-searching a program recorded on a magnetic tape and more particularly, to a video signal recording and reproducing apparatus for recording and reproducing digital broadcasting programs and/or analog broadcasting programs.

In an existing domestic video tape recorder for recording and reproducing analog signals (hereinafter simply referred to as an analog VTR), a technique for displaying a list of the contents recorded on a tape on the screen of a television set (hereinafter simply referred to as a TV) has been proposed in, for example, Japanese patent application No. 6-161842 (corresponding to JP-A-8-32922, US patent application Serial No. 08/500261 and EP-0692790A2) filed by the present applicant.

On the other hand, digital broadcasting using a satellite which is expected to fulfil the next generation TV has been started and an integrated receiver and decoder (hereinafter simply referred to as an IRD) has been practiced which receives the digital satellite broadcasting and delivers video and audio signals in the form of decoded analog signals.

Further, for example, Japanese patent application No. 6-314450 (corresponding to JP-A-8-171701, US patent application Serial No. 08/568470 and EP-0718825A1) filed by the present applicant proposes a VTR which can record and reproduce bit compression encoded video and audio signals in, for example, digital satellite broadcasting without changing the form of original digital signals while keeping compatibility with the existing analog VTR.

In the aforementioned JP-A-8-32922, a production number of the VTR and an identification code of the tape are embedded during the vertical blanking period of a recording analog video signal at the time that recording proceeds and information during the vertical blanking period of a reproduced analog video signal is extracted at the time that reproduction proceeds, thereby ensuring that recorded program information which has been stored in advance can be identified. But, this literature fails to take into account any application to the VTR which can record and reproduce the bit-compression-encoded video and audio signals in digital satellite broadcasting without changing the form of original digital signals.

On the other hand, in the aforementioned JP-A-8-171701, there needs process for decoding the reproduced digital signals to convert them into original analog video and audio signals but this literature fails to take into account any process for displaying a list of contents of recorded programs on the TV screen and retrieving and reproducing a designated program.

Accordingly, in the above-described prior arts, when a digital video signal is recorded or coexisting digital video signal and analog signal are recorded, a digital video program recorded on a tape cannot be retrieved easily.

The present invention intends to address the above drawbacks of the prior arts, provides a video signal recording and reproducing apparatus which can easily retrieve a program recorded on a roll of tape regardless of the kind of a recorded signal even when a digital video signal or coexisting digital video and analog video signals are recorded on the tape.

Hence, a video signal recording and reproducing apparatus according to a first aspect of the present invention comprises storage means for storing recording data pieces related to a digital video signal and an analog video signal, first identification information adding means for adding identification information for identifying the recording data pieces to the analog video signal, first recording and reproducing means for recording and reproducing the analog video signal added with the identification information, extraction means for extracting the identification information from the reproduced analog video signal, second identification information adding means for adding the identification information to the digital video signal, and second recording and reproducing means for recording and reproducing the digital video signal added with the identification information.

The video signal recording and reproducing apparatus according to the first aspect of the present invention further comprises separation means for separating the identification information from a digital video signal reproduced from the first recording and reproducing means, means for displaying a list of recording data pieces corresponding to a plurality of programs recorded on a roll of magnetic tape by consulting the recording data pieces stored in the storage means on the basis of the extracted or separated identification information, and servo means for responding to a program selected from a list displayed on the screen to forwardly wind or rewind the magnetic tape toward the selected program and set up a reproduction operation at the selected program.

In the drawings

Fig. 1 is a block diagram showing an embodiment of a video signal recording and reproducing apparatus according to the invention.

Fig. 2 is a map chart showing an example of library memories of recorded apparatus, tape and program information.

Fig. 3 is a diagram showing an example of a track format for recording a digital video signal.

Fig. 4 is a diagram of an example of a picture showing a list of the contents of programs recorded on a roll of tape.

Figs. 5A and 5B show examples of pictures displayed during index search of a program.

Fig. 6 shows an example of a display picture for setting index search of a midway portion of a program.

Fig. 7 is a flow chart showing the procedure of a tape index search process.

Fig. 8 is a block diagram showing another embodiment of the video signal recording and reproducing apparatus according to the invention.

Fig. 9 is a block diagram showing still another embodiment of the video signal recording and reproducing apparatus.

The present invention will be described in greater detail by way of example with reference to the accompanying drawings.

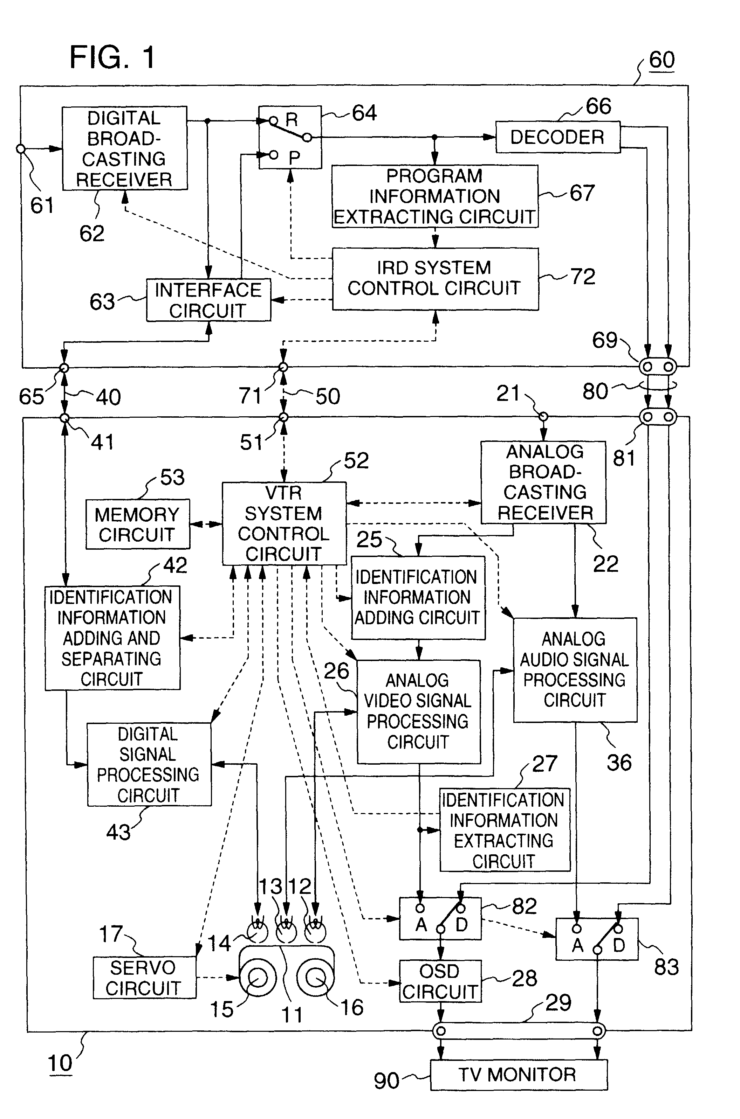

Referring first to Fig. 1, there is illustrated in block form an embodiment of a video signal recording and reproducing apparatus according to the invention. The apparatus comprises a VTR 10, an IRD (integrated receiver and decoder) 60 and a TV 90. Solid lines with arrow show the flow of video and audio signals and dotted lines with arrow show the flow of control signals. The VTR 10 and the IRD 60 are connected to each other through a communication line 50 so that they may control and acquire their partner's state.

Firstly, the construction of the VTR 10 will be described.

The VTR 10 includes a magnetic tape 11, magnetic heads 12, 13 and 14, reels 15 and 16 for taking up the magnetic tape 11 and a servo circuit 17 for controlling the rotation of the reels 15 and 16. Though not shown, rotary drums mounted with the magnetic heads 12, 13 and 14 and a mechanism for running the magnetic tape 11 are also controlled by the servo circuit 17.

An analog broadcasting signal is applied to an input terminal 21 and an analog broadcasting receiver 22 demodulates analog video and audio signals from the inputted analog broadcasting signal. The analog broadcasting receiver 22 also has the function of decoding the demodulated audio signal into L/R stereo audio signals or so-called main/sub two-language audio signals and the decoded information is sent, as program information, to a VTR system control circuit 52. An identification information adding circuit 25 adds tape identification information to the analog video signal to be recorded. An analog video signal processing circuit 26 is adapted to perform a recording and reproducing process for the analog video signal and during recording, it delivers the input signal as it is and supplies and records a signal applied with the recording process to the magnetic head 12 and during reproduction, it applies the reproducing process to a signal reproduced from the magnetic head 12 and delivers the processed signal. An identification information extracting circuit 27 extracts the added tape identification information from the reproduced analog video signal.

An analog audio signal processing circuit 36 is adapted to perform a recording and reproducing process for the analog audio signal demodulated by the analog broadcasting receiver 22 and during recording, it delivers the input signal as it is and supplies and records a signal applied with the recording process to the magnetic head 13 and during reproduction, it applies the reproducing process to a signal reproduced by the magnetic head 13 and delivers the processed signal.

Received video and audio signals of digital broadcasting supplied from the IRD 60 through a signal line 80 are applied to an input terminal 81. Switch circuits 82 and 83 for switching output sources are transferred to contact A when the received signal of analog broadcasting is recorded and reproduced but transferred to contact D when the received signal of digital broadcasting is recorded and reproduced. An on-screen-display (hereinafter simply referred to as OSD) circuit 28 multiplexes information with a background of the inputted analog video signal or an analog video signal generated internally. Displaying information on the background of the inputted video signal is called "superimpose display" and information on the background of the internally generated video signal is called "blue back display" and these terms will be used in the following description. Analog video and audio signals from the VTR 10 are delivered through an output terminal 29.

Digital video and audio signals to be interchanged between the VTR 10 and IRD 60 through a communication line 40 are applied to an input/output terminal 41. An identification information adding and separating circuit 42 adds tape identification information to the digital video and audio signals to be recorded and separates the tape identification information from reproduced digital video and audio signals. A digital signal processing circuit 43 is adapted to perform a recording and reproducing process for the digital video and audio signals and during recording, it applies the digital video and audio signals added with the tape identification information with the recording process to record and supply the processed signals to the magnetic head 14 and during reproduction, it applies the reproducing process to a signal reproduced by the magnetic head 14 and delivers the processed signal.

Control information interchanged between the VTR 10 and IRD through the communication line 50 is applied to an input/output terminal 51. The VTR system control circuit 52 for controlling the whole of the VTR 102 controls individual components of the VTR 10 and has the timer and calendar function to generate time and date information at present. A non-volatile memory circuit 53 is adapted to read/write information data used for index-searching a program recorded on the magnetic tape 11.

Next, components of the IRD 60 will be described.

A digital broadcasting signal is applied to an input terminal 61 and a digital broadcasting receiver 62 demodulates the inputted digital broadcasting signal. An interface circuit 63 processes, during recording, digital video and audio signals demodulated by the digital broadcasting receiver 62 in accordance with a predetermined format and transmits the processed signals to the VTR 10 through a terminal 65 and during reproduction, it receives digital video and audio signals from the VTR 10 through the terminal 65 and delivers deformatted signals. A switch circuit 64 is transferred to contact R during recording and to contact P during reproduction to switch the supplied signals. This switching is automatically effected by an IRD system control circuit 72 which monitors the running state of the VTR 10 through the communication line 50 and as far as the VTR 10 reproduces digital video and audio signals, the switch circuit 64 is kept to be transferred to the contact P. A decoder 66 receives the digital video and audio signals received by the digital broadcasting receiver 62 or the digital video and audio signals reproduced by the VTR 10 to convert them into the original analog video and audio signals. A program information extracting circuit 67 extracts broadcasting date, category and title name of a program from information called program arrangement information contained in the digital video and audio signals and the program information extracted by this circuit is stored in the memory circuit 53 through the IRD system control circuit 72, communication line 50 and VTR system control circuit 52. An output terminal 69 delivers decoded analog video and audio signals and the analog video and audio signals delivered of this output terminal are supplied to the analog video input terminal 81 of VTR 10 through the signal line 80.

An input/output terminal 71 is connected to the communication line 50 for interchanging control information between the VTR 10 and IRD 60. The IRD system control circuit 72 for controlling the operation of the whole of the IRD 60 controls the operation of individual components of the IRD 60.

The operation of the present embodiment will be described in greater detail.

The operation during recording and reproducing of an analog broadcasting program will first be described.

When the recording mode is set to analog recording, an analog video signal demodulated by the analog broadcasting receiver 22 is added with tape identification information by means of the identification information adding circuit 25 and the resulting signal is applied with the recording process by the analog video signal processing circuit 26 and recorded on the magnetic tape 11 by means of the magnetic head 12. In this phase, the VTR system control circuit 52 stores program information such as a recording date of a program being recorded in the memory circuit 53. The analog video signal inputted to the analog video signal processing circuit 26 is passed through the switch circuit 82 and OSD circuit 28 so as to be delivered out of the output terminal 29. On the other hand, an analog audio signal demodulated by the analog broadcasting receiver 22 is applied with the recording process by means of the analog audio signal processing circuit 36 so as to be recorded on the magnetic tape 11 by means of the magnetic head 13 and at the same time, passed through the switch circuit 83 so as to be delivered out of the output terminal 29, with the result that an analog broadcasting program being recorded can be watched and listened by means of the TV 90.

During analog reproduction, an analog video signal reproduced by the magnetic head 12 is applied with the reproducing process by means of the analog video signal processing circuit 26 and the resulting signal is passed through the switch circuit 82 and OSD circuit 28 so as to be delivered out of the output terminal 29. At that time, the identification information extracting circuit 27 extracts the tape identification information from the analog video signal applied with the reproducing process by the analog video signal processing circuit 26. On the other hand, an analog audio signal reproduced by the magnetic head 13 is applied with the reproducing process by means of the analog audio signal processing circuit 36 and the resulting signal is passed through the switch circuit 83 so as to be delivered out of the output terminal 29, so that an analog broadcasting program being reproduced is watched and listened by means of the TV 90.

Next, the operation during recording and reproduction of a digital broadcasting program will be described.

When the recording mode is set to digital recording, digital video and audio signals demodulated by the digital broadcasting receiver 62 are processed by the interface circuit 63 in accordance with a predetermined format and transmitted to the VTR 10 through the terminal 65. The signals are inputted to the identification information adding and separating circuit 42 through the communication line 40 and terminal 41 so as to be added with tape identification information, applied with the recording process by means of the digital signal processing circuit 43 and recorded on the tape 11 by means of the magnetic head 14. On the other hand, the digital video and audio signals demodulated by the digital broadcasting receiver 62 are also inputted to the decoder 66 and the program information extracting circuit 67 through the switch circuit 64 and converted by the decoder 66 into analog video and audio signals which in turn are delivered out of the output terminal 69. In the program information extracting circuit 67, broadcasting date, category and title name of the program are extracted from information called program arrangement information and the contents of the extracted information is stored in the memory circuit 53 through the IRD system control circuit 72, communication line 50 and VTR system control circuit 52. Further, the analog video and audio signals decoded by the decoder 66 are passed through the signal line 80 and input terminal 81 so as to be inputted to the VTR 10. The analog video signal is passed through the switch circuit 82 and OSD circuit 28 so as to be delivered out of the output terminal 29 and the analog audio signal is passed through the switch circuit 83 so as to be delivered out of the output terminal 29, with the result that the digital broadcasting program being recorded can be watched and listened by means of the TV 90.

During reproduction of digital signal, digital video and audio signals reproduced by the magnetic head 14 is applied with the reproducing process by means of the digital signal processing circuit 43, the tape identification information is separated by the identification information adding and separating circuit 42 and the resulting signals are delivered out of the terminal 41. The signals are received through the communication line 40 and terminal 65, deformatted by the interface circuit 63 and then supplied to the decoder 66 through the switch circuit 64. In the decoder, the resulting signals are converted into analog video and audio signals and delivered out of the output terminal 69. Further, the signals are returned to the VTR 10 through the input terminal 81 and the analog video signal is passed through the switch circuit 82 and OSD circuit 28 so as to be delivered out of the output terminal 29 and the analog audio signal is passed through the switch circuit 83 so as to be delivered out of the output terminal 29, with the result that the digital broadcasting program being reproduced can be watched and listened by means of the TV 90.

The operation described as above is the fundamental operation in the present embodiment.

Next, the function characteristic of the present invention (hereinafter called the tape navigation function) will be described. This function is for assigning readjustment numbers to a recording tape and a program, registering recording data pieces (recording date, start time, channel, recording mode and program title) to manage them in respect of individual tapes, and displaying a list of contents of the tape and index-searching the program by utilizing the data pieces.

To realize the tape navigation function, the following processes are carried out in the present embodiment.
(1) Recording data pieces for individual tapes and individual programs are assigned with readjustment numbers and stored in the memory circuit 53 so that an analog program and a digital program may be managed collectively.
(2) A recording signal is recorded while being added with tape identification information such as a readjustment number of tape and an absolute position in the tape longitudinal direction by means of the identification information adding circuit 25 or identification information adding and separating circuit 42, and the identification information is extracted or separated from a reproduced signal by means of the identification information extracting circuit 27 or identification information adding and separating circuit 42.
(3) The recording data pieces such as program titles recorded in the memory circuit 53 are retrieved on the basis of the aforementioned extracted identification information by means of the VTR system control circuit 52.
(4) A signal for displaying a list of the recording data pieces is generated by means of the OSD circuit 26 and superimposed on a video signal.
(5) Index search of a designated program is carried out by the servo circuit 17.

The procedure of the tape navigation function will be described in greater detail.

Firstly, the process during recording will be described.

When a tape is inserted by a user, the VTR 10 performs preliminary reproduction for detecting a tape identification number recorded on the tape and extracts the tape identification number and a tape absolute position from a reproduced signal. If the tape readjustment number cannot be detected, the inserted tape is determined to be an unrecorded one which in turn is assigned with a tape number not used presently. If the absolute position of the tape cannot be detected, a running time of tape calculated by the servo circuit 17 is used as the tape absolute position.

When recording is instructed by the user, the VTR system control circuit 52 stores, as recording data pieces of the recorded program, the tape number detected previously in the preliminary reproduction or newly assigned, readjustment number of the program, recording date, recording start time, recording mode, recording channel, program title, start address indicative of a tape absolute position at the recording start time and information indicating whether the recorded signal is analog or digital.

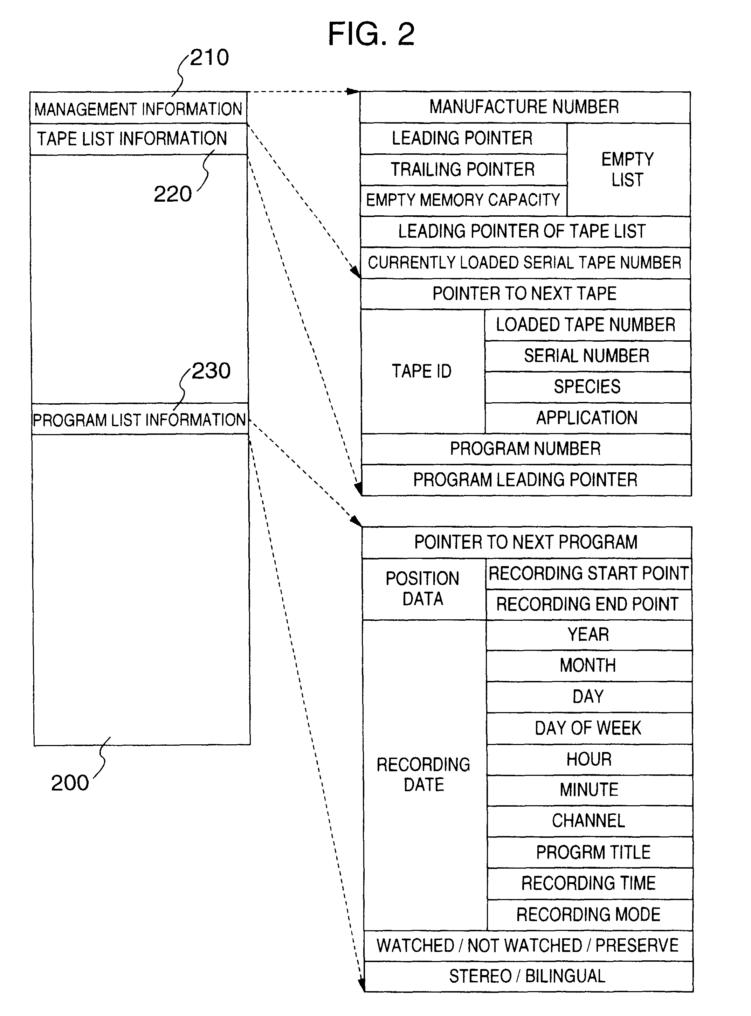

Referring to Fig. 2, an example of a library memory map of the information stored in the memory circuit 53 is shown. A memory 200 is constructed of three kinds of information pieces.

Management information 210 consists of a manufacture number, leading pointer/trailing pointer/empty memory capacity of an empty list, a leading pointer of tape list information and a current loaded serial tape number. The manufacture number is used for recognizing self-recording and reproducing. The empty list pointer indicates an address at which data is to be stored when a program is newly recorded. The empty memory capacity makes it possible to give an alarm to indicate that the memory is filled up. The currently loaded serial tape number is a counter which is automatically cumulated internally in order to prevent duplication of the tape number after the tape is erased from the library.

Tape list information 220 stores management data pieces in respect of individual rolls of tape. The tape list information consists of a pointer indicative of a location of the next tape list information, and a pointer of ID for identifying the tape including a loaded tape number/a serial tape number/species/application, a total program number and an address of program list. Stored in the species are tape types such as T-60/T-120/T-140/T-160/DF-300 and DF/420. This ensures that the type of tape need not be decided each time that the cassette is loaded.

Program list information 230 is a part for storing data pieces in respect of individual recording programs. The program list information consists of a pointer indicative of a location of the next program list, program position data on the tape, a recording date, data indicative of a channel and a mode, data for indicating "watched/not watched/preserved" in respect of individual programs, and audio mode data of stereo/two languages. The present invention differs from the prior arts in that information indicating whether signals recorded to determine title information of a program and the recording mode are analog or digital is also stored. When an analog broadcasting program is recorded, the program title must be inputted directly by the user but when a digital broadcasting program is recorded, thanks to the program information extracting circuit 67 having the function of extracting the broadcasting date and time, category and title of the program as described previously, the VTR system control circuit 52 can receive that information through the communication line 50 and store it in the memory circuit 53 automatically.

During recording, on the other hand, tape identification information in the aforementioned map information, such as a production number of the VTR in the management information 210, a serial tape number in the tape list information 220 and a data piece indicative of a position on the tape in the program list information 230, is added by means of the identification information adding circuit 25 or identification information adding and separating circuit 42 and is recorded, along with the recording signal, on the magnetic tape 11. The data indicative of the position on the tape is incremented every second by means of the VTR system control circuit 52.

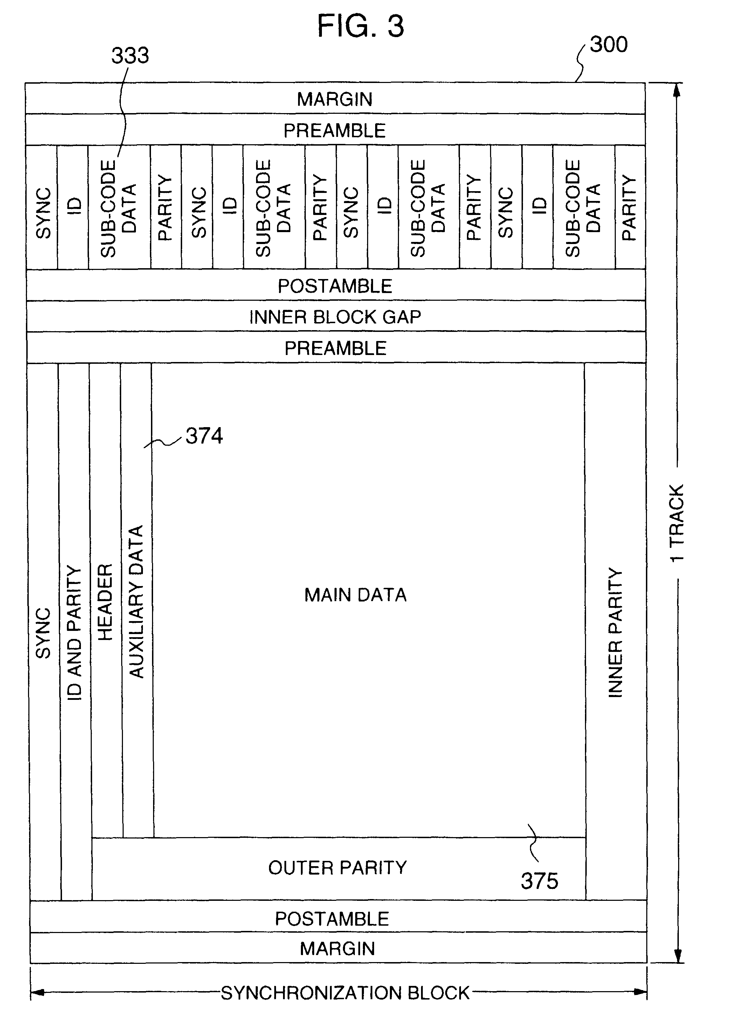

The tape identification information is multiplexed during the vertical blanking period of a video signal in the identification information adding circuit 25 as in the method described in, for example, JP-A-8-32922, and is multiplexed with a sub-code area and/or a supplemental data area provided separately from the main data area for recording the digital video and audio signals in the identification information adding and separating circuit 42 as shown in, for example, a track format of Fig. 3.

Then, responsive to an instruction to end recording from the user, the VTR system control circuit 52 stops the running of the tape and at the same time, stores an end address indicative of a tape absolute position at the time that recording ends, calculates an actual recording time from start and end addresses and writes the calculated recording time, along with the recording data pieces stored at the start of recording, in the memory circuit 53.

Next, the operation during reproduction will be described.

When the user inserts a recorded tape, the VTR 10 performs preliminary reproduction in order to detect tape identification information recorded on the tape. The identification information extracting circuit 27 or the identification information adding and separating circuit 42 extracts the tape identification information such as a VTR production number, a tape identification number and a tape absolute position address from a the signal reproduced by the preliminary reproduction.

Then, when a list of the contents of the tape is instructed by the user (the tape navigation function is set to "ON"), the VTR system control circuit 52 calls out corresponding recording data pieces from the memory circuit 53 on the basis of the tape identification information detected during the preliminary reproduction to control the OSD circuit 26 such that the tape recording contents list is displayed. When the extracted VTR production number does not coincide with that of the VTR for reproduction, an indication to this effect is displayed and the procedure ends.

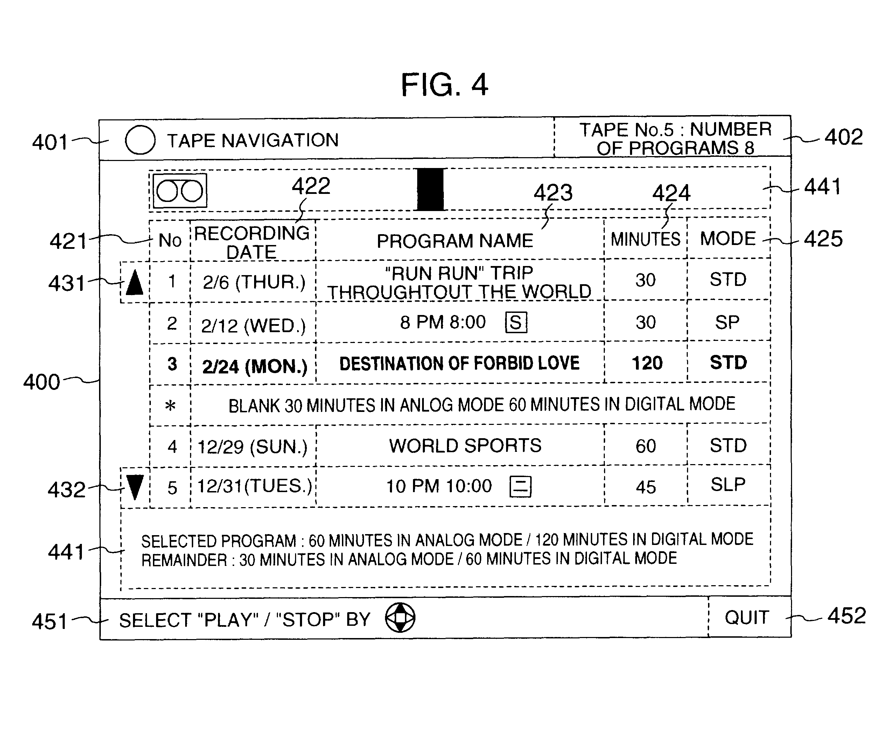

An example of the list display picture is shown in Fig. 4. In the figure, reference numeral 401 designates the title of a display picture and 402 designates a portion for display of a managing number and a number of recording programs of the inserted tape. A mark in a portion designated by 411 indicates which portion of the overall recording program the program displayed on the screen corresponds to.

There are also illustrated columns of a managing number 421 of recording programs, a recording date 422, a program name 423, a recording time 424 calculated from start and end addresses and a recording mode 425. In the column of program name 423, the program title is indicated in the case of digital recording but the recording start time and recording channel are indicated in the case of analog recording. Even in the case of analog recording, the recording start time and recording channel can be changed to the program title by the user's operation. In the column of recording mode 425, "SP" indicates the standard play mode of analog recording, "SLP" indicates a super long play mode of analog recording, and "STD" indicates the standard play mode of digital recording so that analog display may be distinguished from digital display. In thick characters, a program recorded at the present tape position or a program selected by the user is indicated on the basis of the present tape absolute address detected during the preliminary reproduction. When there is an unrecorded portion between programs, a letter of, for example, "blank" and a recordable time for that portion are indicated. At an end portion of program, a letter of, for example, "remainder" and a recordable time for that remainder portion are indicated. At that time, recordable times in both of the analog and digital standard modes are indicated.

In portions 431 and 432, the direction of the cursor is indicated. In a portion 441, the recordable times for the selected program and the final remainder of the program which are indicated at the blank are indicated. At that time, too, the recordable times in both of the analog and digital standard modes are indicated. An operational description is indicated at portions 451 and 452. When the list display of this program ends, "end" in the portion 452 is selected.

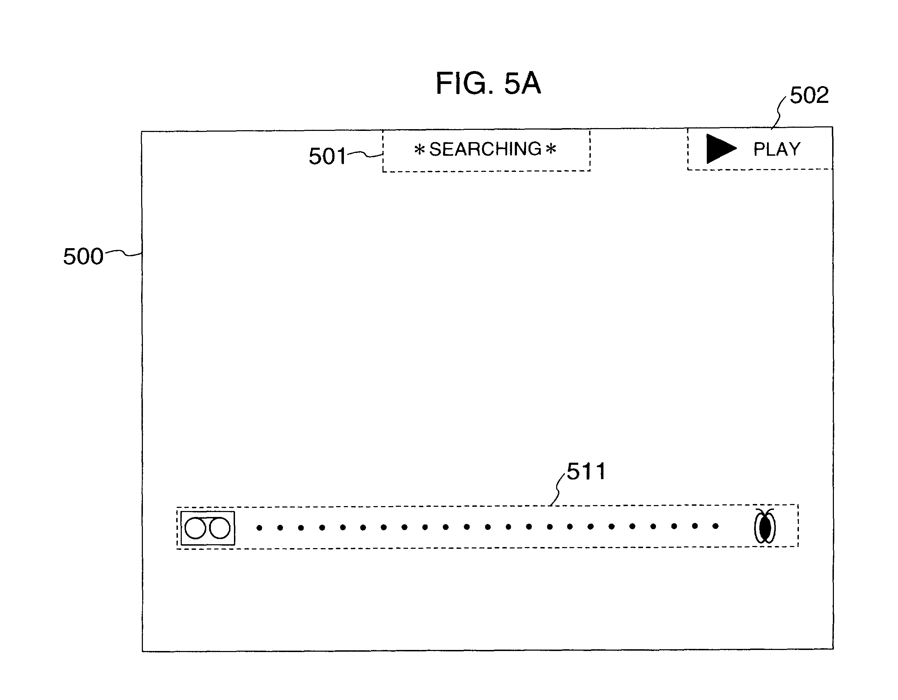

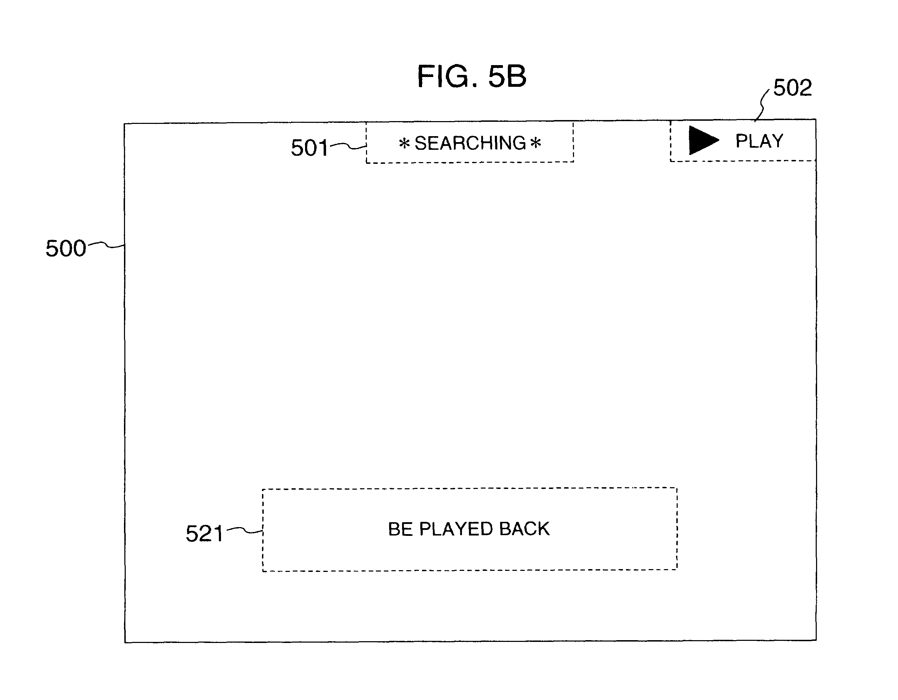

Next, when the user selects a program in the display picture as shown in Fig. 4 and depresses a "play" key, the VTR system control circuit 52 first sets the servo circuit 17 and mechanism to the forward wind mode or rewind mode to perform index search of the selected program. At that time, for example, a blue back display as shown in Fig. 5A or 5B is displayed by means of the OSD circuit 26. Fig. 5A shows an example of a display picture during high speed search and Fig. 5B shows an example of a display picture immediately near the stop operation.

Then, as soon as the index search ends, the VTR system control circuit 52 sets the analog video signal processing circuit 26 or digital video signal processing circuit 43, the servo circuit 17 and mechanism to the play mode to bring the VTR 10 into play operation state.

Subsequently, the program selected through the previously-described operation is reproduced and can be watched and listened on the TV 90.

On the other hand, when the user wants to perform recording reservation of a program, a portion desired to be recorded is selected on the aforementioned list display picture and a "stop" key is depressed to index-search the selected portion. At that time, not only the portion indicated at "blank" and "remainder" can be selected but also an unwanted program can be selected for updately recording a new program.

Incidentally, in the present invention, not only the index search of the head portion of a program but also index search of a midway portion of a program (hereinafter this function is called the time navigation function) can be ensured. In the time navigation, a midway portion of program designated by the user is retrieved on the basis of an absolute address of tape recorded as tape identification information.

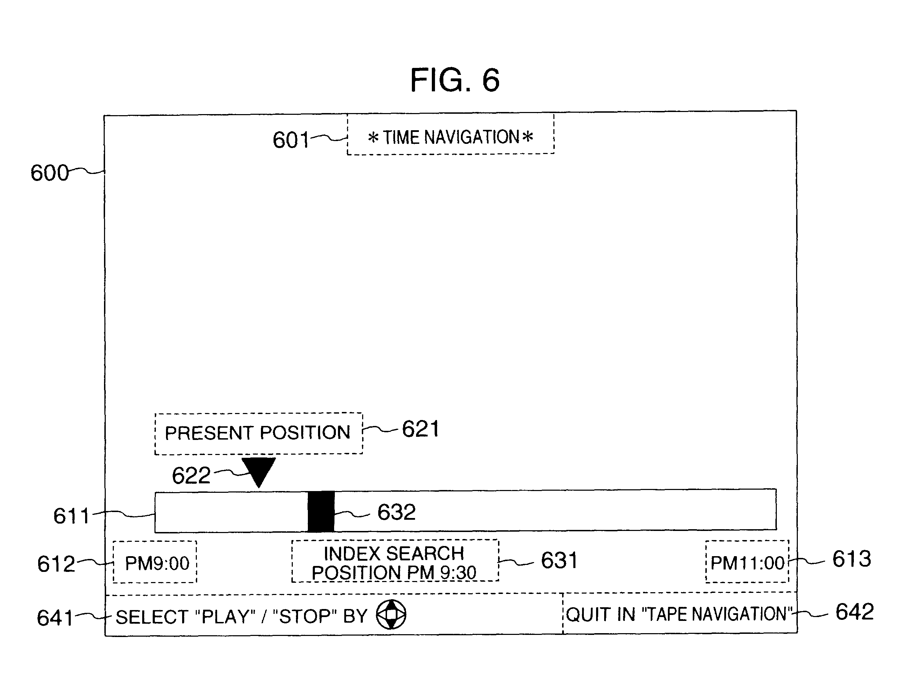

An example of a display picture during the time navigation is depicted in Fig. 6. In the figure, it is indicated at a display portion 601 that the display picture is based on the time navigation function. A selected program is indicated at 611 and recording start and end times of the program are indicated at 612 and 613. The present tape position is indicated at 621 and 622 and the index search position is indicated at 631 and 632. The user is permitted to perform index search at an intended position by moving the index search position 632 by means of the cursor and depressing the "reproduction" or "stop" key. An operational description is indicated at portions 641 and 642 and when index search at not a midway portion of a program but the head portion thereof is desired, the "tape navigation" key is depressed to stop the procedure and thereafter the "play" or "stop" key is depressed. When the present tape position does not exist in the selected program, only "the present position" is indicated at the present position indicating portion 621 and the present position indicating mark 622 comes to either one end of the program display portion 611.

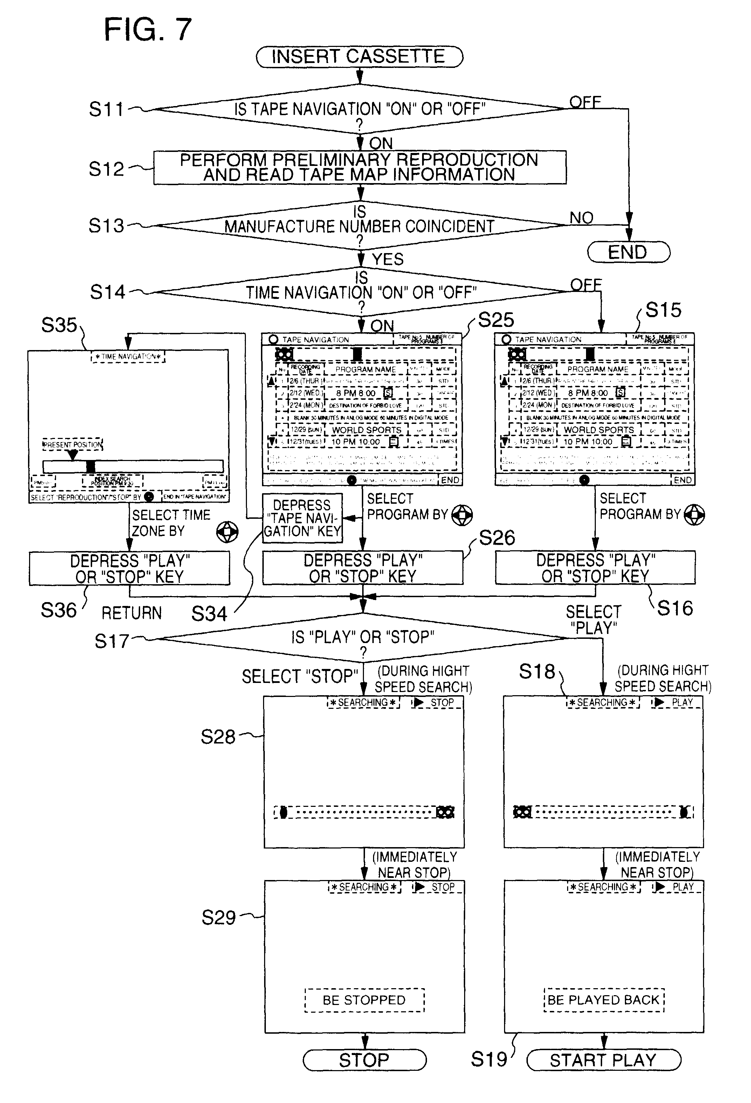

Referring now to Fig. 7, there is illustrated a flow chart which sums up the above procedure. More particularly,
step 11 (S11): it is checked whether the tape navigation function is set to "ON" and if "OFF", the procedure ends;
step 12 (S12): when the tape navigation function is "0N", preliminary reproduction is carried out for about one second to read tape map information;
step 13 (S13): it is checked whether a VTR production number read during the preliminary reproduction coincides with a production number stored in the library memory and if non-coincident, the tape is handled as a tape outside the object and the procedure simply ends;
step 14 (S14): it is checked whether the time navigation function is set to "ON" and if "OFF", the procedure proceeds to step 15 (S15) but if "ON", the procedure proceeds to step 25 (S25);
step 15 (S15) and step 25 (S25): tape list information/program list information is read in accordance with the tape number and the data is sent to the OSD circuit 26 so as to be displayed on the TV screen. Then, the cursor is moved to select a program;
step 34 (S34): the "tape navigation" key is depressed;
step 35 (S35): the picture for setting the index search portion shown in Fig. 6 is displayed and a time zone of the index search is set by means of the cursor;
step 16 (S16), step 26 (S26) and step 36 (S36): the "reproduction" or "stop" key is depressed;
step 17 (S17): it is checked whether the key depressed in the step 16 (S16), step 26 (S26) or step 36 (S36) is for "play" or "stop" and if "play", the procedure proceeds to step 18 (S18) but if "stop", the procedure proceeds to step 28 (S28);
step 18 (S18) and step 28 (S28): the tape is forwardly wound or rewound from the present tape position toward the index search position of the selected program. At that time, the picture shown in Fig. 5A is displayed; and
step 19 (S19) and step 29 (S29): when about 5 minutes before the head portion of the selected program is reached, the VISS (VHS Index Search System) signal detecting mode is set and the tape feed speed is controlled suitably. At that time, the picture shown in Fig. 5B is displayed. With the VISS signal detected, the operation conforming to the key depressed in the step 16 (S16), step 26 (S26) or step 36 (S36) is executed. In the case of index search on the way of the program based on the time navigation function, the tape is forwardly wound or rewound further to the intended location and then, the operation conforming to the key depressed in the step 16 (S16), step 26 (S26) or step 36 (S36) is executed.

Though not illustrated in Fig. 7, in the case where the user selects a program and depresses a "recording" key, as soon as the same index search process as above is carried out, the VTR system control circuit 25 sets the analog video signal processing circuit 26 or digital video signal processing circuit 43 and the servo circuit 17 and mechanism to the recording mode so that the VTR 10 may be brought into the recording operation state. Then, concurrently with completion of recording of the program received through the previously-described operation, the recorded program can be watched and listened on the TV 90.

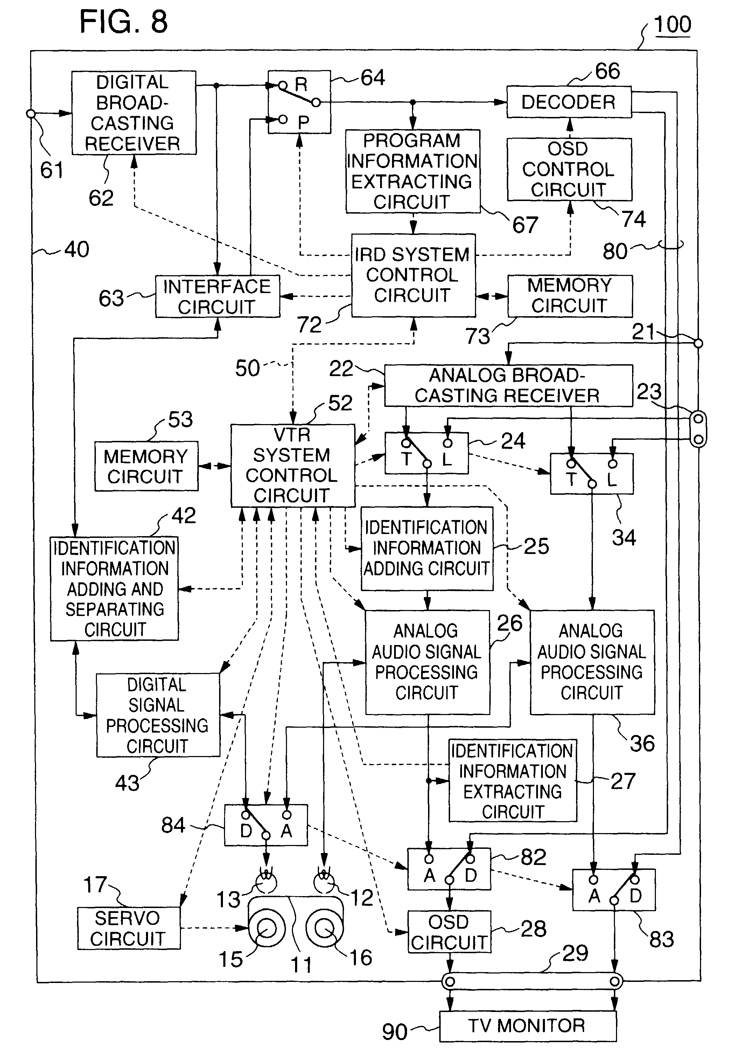

Referring to Fig. 8, another embodiment of the video signal recording and reproducing apparatus according to the present invention is illustrated in block form. According to the present embodiment, the VTR 10 and the IRD 60 in the embodiment of Fig. 1 are integrated to form a recording and reproducing apparatus 100 and a memory circuit 73 connected to the IRD system control circuit 72 cooperates with the memory circuit 53 for storing the program information. A decoder 66 has the function of OSD displaying information by displaying a delivering video signal in superimpose display or blue back display and the display pictures shown in Figs. 4 and 6 are formed by the decoder 66 through an OSD control circuit 74. The display pictures shown in Figs. 5A and 5B are formed by the OSD circuit 28 in the VTR.

In other words, the present embodiment differs from the embodiment of Fig. 1 by having the following processes.
(1) Recording data pieces of individual tapes and individual programs are assigned with readjustment numbers and stored in the memory circuit 73 so as to collectively manage analog programs and digital programs.
(2) A recording data piece such as a program title stored in the memory circuit 73 is retrieved on the basis of extracted identification information by means of the IRD system control circuit 72.
(3) A signal for displaying a list of the recording data pieces is generated and superimposed on a video signal by means of the decoder 66 under the control of the OSD control circuit 74.

In the present embodiment, the analog audio signal recording and reproducing magnetic head 13 also fulfils the role of recording and reproducing digital video and audio signals and a switch circuit 84 switches the recording and reproducing signals. Further, an external input terminal 23 for analog video and audio signals is added and switch circuits 24 and 34 perform switching between video and audio signals demodulated by the analog broadcasting receiver and video and audio signals from the external input terminal 23. Other components corresponding to those in Fig. 1 are designated by identical reference numerals and the operation based on the tape navigation function according to the invention is the same as that in the embodiment of Fig. 1.

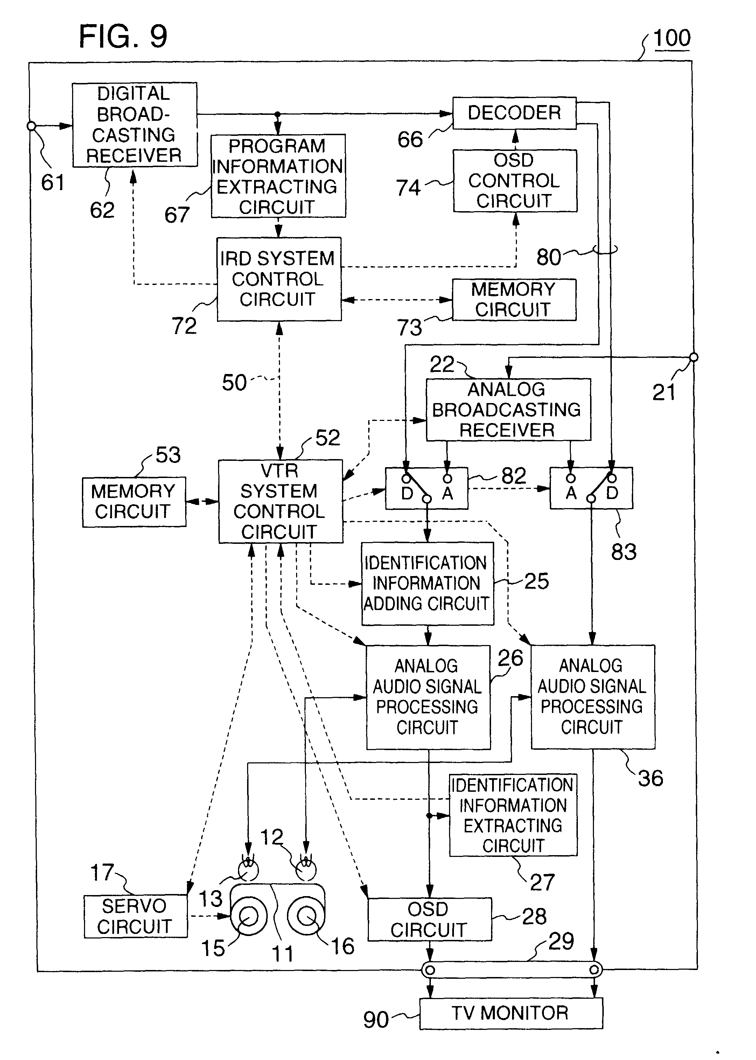

Referring to Fig. 9. there is illustrated, in block form, still another embodiment of the video signal recording and reproducing apparatus according to the present invention. In the present embodiment, the invention is applied to a VTR dedicated to analog recording which is devoid of the digital recording function. According to the present embodiment, switch circuits 82 and 83 corresponding to those in Figs. 1 and 9 are not provided on the output side but are provided on the input side. During recording of a digital broadcasting program, each of the switch circuits 82 and 83 is transferred to D contact and analog recording is carried out in the conventional manner. Other components corresponding to those in Figs. 1 and 8 are designated by identical reference numerals and the operation based on the tape navigation function according to the invention is essentially the same as that in the foregoing embodiments. In other words, in the display picture of Fig. 4, for a recorded program of digital broadcasting, a title of the program is displayed. But since even a digital broadcasting program is recorded in analog form, only recording modes of "standard" and "three times" are available.

As described above, according to the present invention, even when a digital video signal is recorded on the tape or coexisting digital and analog video signals are recorded, a program recorded on the tape can be retrieved easily regardless of the kind of the recorded signal.

## Claims

1. A video signal recording and reproducing apparatus for use in a magnetic recording and reproducing apparatus which selects a digital video signal or an analog video signal to record the selected signal on a magnetic tape (11) and reproduces the recorded signal, comprising:
memory means (53) for storing recording data pieces related to the digital video signal and the analog video signal;
first identification information adding means (25) for adding to the analog video signal identification information for identifying the recording data pieces;
first recording and reproducing means (12) for recording and reproducing the analog video signal added with the identification information:
second identification information adding means (42) for adding to the digital video signal the identification information; and
second recording and reproducing means (14) for recording and reproducing the digital video signal added with the identification information.

2. A video signal recording and reproducing apparatus according to claim 1 further comprising:
identification information extracting means (27) for extracting said added identification information from said analog video signal reproduced from said first recording and reproducing means (12);
identification information separating means (42) for separating said added identification information from said digital video signal reproduced from said second recording and reproducing means (14);
display means (28) for displaying on the screen a list of recording data pieces corresponding to a plurality of analog and/or digital video signals recorded on a roll of said magnetic tape (11) by consulting said recording data pieces stored in said memory means (53) on the basis of said identification information extracted or separated by said identification information extracting means or said identification information separating means; and
servo means (17) for responding to a program selected from the list displayed on the screen to forwardly wind or rewind said magnetic tape (11) toward the selected program and set up a reproduction operation at the selected program.

3. A video signal recording and reproducing apparatus according to claim 2 further comprising:
program information extracting means (67) for extracting program information contained in said digital video signal from said digital video signal to be recorded,
wherein said memory means (53) stores said program information as said recording data pieces; and
when the record of said digital video signal is contained at the time that the list of said recording data pieces indicative of the recording contents of said plurality of analog and/or digital video signals is displayed on the screen, said display means (28) displays a name of said program contained in said program information.

4. A video signal recording and reproducing apparatus according to claim 3, wherein when the list of said recording data pieces indicative of the recording contents of said plurality of analog and/or digital video signals is displayed on the screen, said display means (28) displays the list by adding a display portion for distinguishing analog recording from digital recording in respect of individual program information pieces.

5. A video signal recording and reproducing apparatus according to claim 4, wherein when the list of said recording data pieces indicative of the recording contents of said plurality of analog and/or digital video signals is displayed on the screen, said display means (28) displays a recordable time for an unrecorded portion of said magnetic tape, a recordable time during analog recording and a recordable time during digital recording.

6. A video signal recording and reproducing apparatus according to claim 1 further comprising:
decoding means (66) for decoding the digital video signal reproduced by said second recording and reproducing means (14) to a second analog video signal; and
switching means (82) for selecting and switching said analog video signal and said second analog video signal and delivering said second analog video signal when said digital video signal is recorded and reproduced.

7. A video signal recording and reproducing apparatus according to claim 2, wherein said servo means (17) responds to a program selected on said list displayed on the screen to forwardly wind or rewind said magnetic tape (11) toward the selected program and set up a reproduction operation at the head portion of the selected program.

8. A video signal recording and reproducing apparatus according to claim 2, wherein said servo means (17) responds to a program selected on said list displayed on the screen to forwardly wind or rewind said magnetic tape (11) toward the selected program and set up a reproduction operation at a midway portion of the selected program on the basis of an absolute address of said magnetic tape (11) contained in said identification information.

9. A video signal recording and reproducing apparatus for use in a magnetic recording and reproducing apparatus which selects a digital video signal or an analog video signal to record the selected signal on a magnetic tape (11) and reproduces the recorded signal, comprising:
first demodulating means (22) for receiving an analog broadcasting signal and demodulating it to produce a first analog video signal;
second demodulating means (62) for receiving a digital broadcasting signal and demodulating it to produce the digital video signal;
decoding means (66) for decoding video said digital video signal to a second analog video signal;
switching means (82) for selecting and switching said first and second analog video signal;
program information extracting means (67) for extracting program information from said digital video signal;
memory means (53, 73) for storing program information related to said first and/or second analog video signal as recording data pieces;
identification information adding means (25) for adding to the analog video signal selected by said switching means (82) identification information for identifying said recording data pieces;
recording and reproducing means (12) for recording and reproducing the analog video signal added with said identification information;
identification information extracting means (27) for extracting said added identification information from the reproduced analog video signal;
display means (28) for displaying on the screen a list of program names contained in said program information which indicates the recording contents of a plurality of first and/or second analog video signals recorded on a roll of said magnetic tape (11) by consulting and displaying the recording data pieces stored in said memory means (53, 73) on the basis of said identification information extracted from said identification information extracting means (27); and
servo means (17) for responding to a program selected from the list displayed on the screen to forwardly wind or rewind said magnetic tape (11) toward the selected program and set up a reproduction operation at the selected program name.

10. A video signal recording and reproducing apparatus according to claim 9, wherein said servo means (17) responds to the program selected on the list displayed on the screen to forwardly wind or rewind said magnetic tape (11) toward the selected program and set up a reproduction operation at the head portion of the selected program.

11. A video signal recording and reproducing apparatus according to claim 9, wherein said servo means (17) responds to the program selected on the list displayed on the screen to forwardly wind or rewind said magnetic tape (11) toward the selected program and set up a reproduction operation at a midway portion of the selected program on the basis of an absolute address of said magnetic tape (11) contained in said identification information.

12. A video signal recording and reproducing apparatus for use in a magnetic recording and reproducing apparatus which selects a digital video signal or an analog video signal to record the selected signal on a magnetic tape (11) and reproduces the recorded signal, comprising:
a memory circuit (53) for storing recording data pieces related to the digital video signal and the analog video signal;
a first identification information adding circuit (25) for adding to said analog video signal identification information for identifying said recording data pieces;
a first recording/reproducing circuit and mechanism (12) for recording and reproducing the analog video signal added with the identification information;
a second identification information adding circuit (42) for adding the identification information to the digital video signal; and
a second recording/reproducing circuit and mechanism (14) for recording and reproducing the digital video signal added with the identification information.

13. A video signal recording and reproducing apparatus according to claim 12 further comprising:
an identification information extracting circuit (27) for extracting said added identification information from said analog video signal reproduced from said first recording/reproducing circuit and mechanism (12);
an identification information separating circuit (42) for separating said added identification information from said digital video signal reproduced from said second recording/reproducing circuit and mechanism (14);
a display monitor (28) for displaying on the screen a list of recording data pieces corresponding to a plurality of analog and/or digital video signals recorded on a roll of said magnetic tape (11) by consulting said recording data pieces stored in said memory circuit (53) on the basis of said identification information extracted or separated by said identification information extracting circuit (27) or said identification information separating circuit (42); and
a servo circuit (17) for responding to a program selected from the list displayed on the screen to forwardly wind or rewind said magnetic tape (11) toward the selected program and set up a reproduction operation at the selected program.
